# EUROPÄISCHE PATENTSCHRIFT

(11) **EP 0 787 395 B1**
(45) Veröffentlichungstag und Bekanntmachung des Hinweises auf die Patenterteilung: **15.07.1998**
(21) Anmeldenummer: 95936528.9
(22) Anmeldetag: 20.10.1995
(51) Int. Cl.: H04L 25/06

(54) **ENTSCHEIDUNGSVERFAHREN FÜR PUNKT-ZU-MULTIPUNKT-NETZWERKE**
DECISION-MAKING PROCESS FOR POINT-TO-MULTIPOINT NETWORKS
PROCEDE DECISIONNEL POUR RESEAUX DE TELECOMMUNICATIONS POINT-A-POINT ENTRE UN CENTRAL ET DES TERMINAUX MULTIPLES

(30) Priorität: 27.10.1994 DE 4438345
(43) Veröffentlichungstag der Anmeldung: 06.08.1997
(73) Patentinhaber: NOKIA TELECOMMUNICATIONS OY, 02601 Espoo (FI)
(72) Erfinder: BRUNDERT, Martin, D-40474 Düsseldorf (DE); MUSIOL, Torsten, D-40468 Düsseldorf (DE)
(74) Vertreter: Schippan, Ralph, Dr.-Ing.
(86) Internationale Anmeldenummer: EP9504119
(87) Internationale Veröffentlichungsnummer: WO9613923

(56) Entgegenhaltungen:
- EP-A- 0 022 723
- EP-A- 0 113 082
- EP-A- 0 423 582

## Beschreibung

Die Erfindung bezieht sich auf ein System und ein Verfahren zur Punkt-zu Multipunkt Datenkommunikation mit einer Zentralstation und einer Vielzahl von über ein Netzwerk, insbesondere ein passives optisches Netzwerk mit der Zentralstation verbundenen Endstellen, wobei der Datenverkehr über Zeitbereichsmultiplex (TDM/TDMA) erfolgt, bei dem im in die Zentralstation gerichteten (hinlaufenden) Datenstrom jeder Endstelle jeweils eines von unmittelbar bitweise aneinander angrenzenden Datenpaketen (Burst) zugeordnet ist, und mit einer in der Zentralstation angeordneten gleichstromgekoppelten Empfangseinrichtung, die einen Verstärker für das optoelektrisch gewandelte Signal, einen Speicher zur der jeweiligen Endstelle zugeordneten Abspeicherung eines dem gemessenen Spitzenwertpegel entsprechenaen Wertes, und eine Vergleichereinheit aufweist, in der das Signal mit einer aus dem Spitzenwertpegel des jeweiligen Burst abgeleiteten Referenzspannung (V_{ref}) verglichen wird und hieraus das digitalisierte Signal erzeugt wird.

Systeme zur Punkt-zu-Multipunkt Datenkommunikation bestehen allgemein aus einer Zentralstation und einer bestimmten Anzahl von Endstellen, welche in beliebigem Abstand zur Zentralstation angeordnet sein können und mit ihr über ein in der Regel verzweigtes Netzwerk, insbesondere ein passives optisches Netzwerk, verbunden sind. Eine häufig für passive optische Netzwerke angewandte Datenübertragungstechnik ist die Zeitbereichsmultiplextechnik (time division multiplex). Hierbei werden die mit einer hohen Bitrate übertragenen Bits zu sich wiederholenden Gruppen (frames) zusammengefaßt. Jeder Bitrahmen enthält neben einer Kennung und Managementinformationen die aus den einzelnen Endstellen stammenden bzw. für die einzelnen Endstellen bestimmten Informationen. Diese Informationen sind in einzelnen Datenblöcken, sogenannten Bursts, gruppenweise zusammengefaßt. Um eine möglichst gute Übertragunsgsdichte zu erreichen, ist das Datenkommunikationssystem so organisiert, daß die aus den einzelnen Endstellen stammenden Bursts möglichst lückenlos aneinander grenzen.

Aufgrund toleranzbedingter Unterschiede in der Sendeleistung der Endstellen, der unterschiedlichen Längen der zu durchlaufenden Netzstrecken und einer gegebenenfalls unterschiedlichen Zahl zu passierender optischer Verzweiger weisen die einzelnen Daten-Bursts beim Empfang in der Zentralstation unterschiedliche Signal-Amplituden (Spitzenwertpegel) auf. Damit die Zentralstation die aus den einzelnen Endstellen stammenden Informationen möglichst fehlerfrei rückgewinnen kann, benötigt die Empfangseinrichtung in der Zentralstation eine hohe Dynamik, um sowohl die Bursts der nächstliegenden Endstelle ohne Übersteuerung als auch diejenigen der weit entferntesten Endstellen mit hinreichendem Signal/ Rauschverhältnis zu empfangen.

Die einfachste Rückgewinnungsmethode bei der opto-elektronischen Wandlung sieht vor, daß eine Photodiode einen Strom proportional zur optischen Leistung liefert, welcher anschließend in eine Spannung gewandelt wird. Ein Vergleicherschaltkreis vergleicht diese Spannung mit einer Referenzspannung, um festzustellen, ob eine logische Eins oder eine logische Null empfangen wurde.

Für Punkt-zu-Punkt Datenkommunikation, bei der die Amplitude des Sendesignals sich nur sehr langsam verändert, ist eine Wechselstromkopplung vorzugsweise geeignet, bei der die Zeitkonstante eines die eingehende Signalfolge empfangenden Integrators so gewählt ist, daß sie beträchtlich größer ist als die Bit-Periode des eingehenden Signals. Aufgrund des hohen geforderten Dynamikbereichs bei gleichzeitig hoher Änderungsgeschwindigkeit der Amplitude an der Grenze zweier Bursts ist eine solche Kopplung der Empfängereinrichtung bei Punkt-zu-Multipunkt Datenkommunikation ungeeignet.

Stattdessen wird die sogenannte Gleichstromkopplung angewendet, bei der das eingehende opto-elektrisch gewandelte Signal burstweise entsprechend der Dämpfung, der das zugehörige Burst bei der Übertragung über das Netz unterworfen ist, verstärkt und in einer Vergleicherstufe mit einer festen Referenzspannung verglichen wird. Zum Erreichen eines hinreichenden Dynamikbereichs ist eine Veränderung des Verstärkungsfaktors in weiten Grenzen erforderlich. Solche nach der automatic gain control (AGC) -Technik arbeitenden Empfängerschaltkreise erfüllen nicht die Erfordernisse, die für schnelle Datenübertragungstechnik notwendig sind. Aufgrund der unmittelbaren Aufeinanderfolge der einzelnen Bursts ist es für die Empfängerschaltung erforderlich, innerhalb einer wenigen Bits entsprechenden Zeit (guard time) die Verstärkung anzupassen, wobei es zu Einschwingvorgängen kommt, die die Erkennung der ersten Bits des nachfolgenden Bursts beeinträchtigen.

Zur Messung der jeweils erforderlichen Verstärkungsfaktoren werden dabei schnelle Spitzenwertpegeldetektoren eingesetzt. Diese haben den Nachteil, daß Störungen im Übertragungsweg sich als Differenz zwischen gemessenem Spitzenwert und eigentlicher Nutzsignalamplitude auswirken und damit eine optimale Pegelentscheidung für alle nachfolgenden Bits eines Bursts beeinträchtigt wird.

Aus der EP 0 586 746 ist ein Datenkommunikationssystem der eingangs genannten Art bekannt, welches zwei parallel zueinander angeordnete Vergleicher aufweist, die alternativ zueinander betrieben werden. Dabei wird ausgenutzt, daß die Empfangseinrichtung aufgrund der bei der Einrichtung des Systems vorgenommenen Abstimmung Kenntnis davon hat, in welcher Reihenfolge die einzelnen Daten-Bursts ausgehend von den Endstellen an der Empfangseinrichtung ankommen. Da die Abweichungen in der Signal-Amplitude zwischen jeweils derselben Endstelle entstammenden Daten-Bursts vernachlässigbar gering sind, können diesen zugeordnete vorabgespeicherte Werte zugeordnet werden. Aufgrund der Kenntnis der Reihenfolge der ankommenden Bursts kann daher der andere Vergleicher bereits aktiviert werden, wenn der aktuelle Vergleicher noch in Funktion ist. Hierdurch können durch Einschwingvorgänge verursachte Datenübertragungsfehler vermieden werden. Ein jeder der beiden Vergleicher vergleicht den jeweils an seinem Eingang anliegenden Signalwert mit dem am jeweils anderen Eingang anliegenden Referenzwert. Eine Steuerschaltung entscheidet, welche der beiden Vergleicher jeweils aktiv ist.

Die bekannte Schaltung weist einen hohen Hardware-Aufwand auf, da zum einen die Vergleicherstufe sowie der zugehörige DA-Wandler doppelt ausgelegt sein muß und zum anderen im Anschluß an die Bestimmung der Spitzenwertpegel ein AD-Wandler vorgesehen sein muß, damit die Spitzenpegelwerte im Speicher abgelegt werden können.

Der vorliegenden Erfindung liegt daher die Aufgabe zugrunde, eine Vorrichtung bzw. ein Verfahren der eingangs genannten Art dahingehend weiterzuentwickeln, daß der Hardware-Aufwand für den Burst-Mode Receiver reduziert wird und daß eine große Dynamik erreicht wird.

Diese Aufgabe wird erfindungsgemäß bei einer Vorrichtung der eingangs genannten Art dadurch gelöst, daß der Verstärker eine Vielzahl von parallelen Verstärkereinheiten jeweils konstanter Verstärkungsfaktoren (G1, G2) aufweist, die alternativ von der Steuereinheit entsprechend dem dem jeweiligen Burst zugehörigen vorabgespeicherten Wert für den Spitzenwertpegel (Vₚₑₐₖ) ausgewählt werden und daß eine weitere Vergleichereinheit vorgesehen ist, in der das verstärkte Signal mit dem dem jeweiligen Burst zugeordneten Spitzenwertpegel verglichen wird derart, daß bei einer Abweichung der Speicherwert für den Spitzenwertpegel und der Verstärkungsfaktor für den aktuellen Burst schrittweise angepaßt wird.

Bei einem Verfahren der eingangs genannten Art wird diese Aufgabe dadurch gelöst, daß die Verstärkung des empfangenen Signals burstweise mit aus einer vorgebbaren Anzahl von festen Werten auswählbaren Verstärkungsfaktoren (G1, G2) erfolgt, daß das verstärkte Signal burstweise jeweils mit einem dem Spitzenwertpegel (Vₚₑₐₖ) des jeweiligen Bursts entsprechenden abgespeicherten Wert verglichen wird und daß aus der Abweichung eine Korrektur durch schrittweise Anpassung der Speicherwerte für Spitzenwertpegel und gewähltem Verstärkungsfaktor vorgenommen wird.

Gemäß der Erfindung wird jedem eingehenden Daten-Burst selektiv einer der vorwählbaren Verstärkungsfaktoren zugeordnet, die aus dem vorherigen Empfang des Bursts aus derselben Endstelle als optimal angesehen wurden. Die Steuereinheit, in deren Speicher Werte für den Endstellen zugeordnete Spitzenwertpegel der Daten-Bursts abgespeichert sind, wählt durch entsprechende Ansteuerung eines Multiplexers den Verstärkungsfaktor aus. Gleichzeitig wird der der jeweiligen Endstelle entsprechende Speicherwert für den Spitzenwertpegel digital-analog gewandelt und mit demjenigen Signalpegel verglichen, der sich nach der Verstärkung der eingehenden Signalfolge mit dem ausgewählten Verstärkungsfaktor ergibt. Aufgrund der Tatsache, daß die Spitzenwertspannung wenig unterhalb des (erwarteten) abgepeicherten Wertes eingestellt wird, ergibt sich eine sukzessive Approximation des Speicherwertes durch den Vergleich der beiden Spannungen. Wenn nämlich der Vergleich eine positive Abweichung ergibt, wird der entsprechende Speicherwert um 1 heraufgesetzt, so daß beim nächsten Auftreten des Daten-Bursts aus derselben Endstelle der Speicherwert und erforderlichenfalls auch der Verstärkungsfaktor korrigiert sind. Entsprechend umgekehrt erfolgt die Korrektur bei einer negativen Abweichung. Die Erfindung zeichnet sich gegenüber dem Stand der Technik durch einen sehr viel höheren Dynamikbereich aus, da die Anzahl und die Werte der einzelnen Verstärkereinheiten des Verstärkers entsprechend dem Anwendungsfall beliebig vorwählbar sind. Darüber hinaus ist die erfindungsgemäße Lösung durch einen sehr viel einfacheren Hardware-Aufwand gekennzeichnet, da der beim Stand der Technik notwendige Analog-Digital-Wandler zur Umwandlung des gemessenen Spitzenwertpegels in den Speicherwert entfallen kann.

Weitere bevorzugte Ausführungsformen der Erfindung sind in den Unteransprüchen gekennzeichnet.

Die Erfindung wird im folgenden anhand einer Zeichnung näher erläutert.

Dabei zeigen:
- Fig. 1: einen Empfängerschaltkreis für ein Kommunikationssystem, wie es aus dem Stand der Technik bekannt ist,
- Fig. 2: eine Empfängerschaltung für ein Kommunikationssystem gemäß der vorliegenden Erfindung in einem ersten Ausführungsbeispiel und
- Fig. 3: eine Empfängerschaltung für ein Kommunikationssystem gemäß der vorliegenden Erfindung in einem zweiten Ausführungsbeispiel.

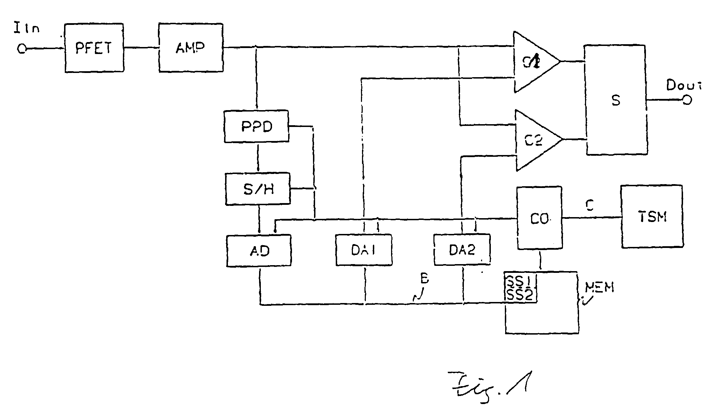

Die in Fig. 1 dargestellte aus dem Stand der Technik bekannte Empfängerschaltung sieht vor, daß die von der Glasfaserstrecke des passiven optischen Netzwerkes kommende Signalfolge I_{In} in einem opto-elektrischen Wandler PFET in ein elektisches Signal gewandelt wird, welches mittels eines Verstärkers AMP verstärkt wird.

Mittels eines Spitzenwertdetektors PPD werden die Spitzenwerte des verstärkten Signals erfaßt und mittels einer Abtasthalte-Schaltung (sample/ hold Schaltung, S/H) abgespeichert und nachfolgend mittels eines Analog-Digital-Wandlers AD in digitale Werte gewandelt.

Von diesen werden die Referenzspannungswerte abgeleitet, die den beiden Vergleicherstufen C1, C2 jeweils am invertierenden Eingang zugeordnet werden. Die Referenzspannungen werden dabei zunächst in einem Speicher MEM abgespeichert und unter Einfluß der Steuerung C0 ausgelesen. Die in dem Speicher MEM abgelegten Daten für die Referenzspannungen sind bezogen auf die jeweiligen Endstellen, von denen der Daten-Burst stammt.

In den Vergleicherschaltungen C1,C2 wird das verstärkte Empfangssignal jeweils verglichen mit dem am invertierenden Eingang anliegenden Referenzspannungssignal. Durch den Schalter S werden die Vergleicher C1,C2 alternativ aktiviert. Wenn der Vergleicher C1 arbeitet, steuert die Steuereinheit C0 den Speicher MEM und die Wandler DA1/DA2 derart, daß an den Digital-Analog-Wandler DA2 bereits die für die Endstelle des nachfolgenden Daten-Bursts maßgeblichen Referenzwertdaten angelegt werden, um in ein Referenzwertsignal umgewandelt zu werden. Da die Zentralstation über die Information verfügt, welche Endstelle den nächsten Daten-Burst aussendet, liegt diese Information in der Steuereinheit vor.

Der Digital-Analog-Wandler DA2 wandelt die digitalen Daten in analoge und legt sie an den Eingang der Vergleicherschaltung C2 an. Daher ist, wenn das von der nächsten Endstelle ausgesandte Signal empfangen wird, der maßgebliche Referenzspannungswert bereits eingeschwungen am invertierenden Eingang der Vergleicherschaltung C2 vorhanden, so daß innerhalb des Übergangs von einem Bit zum nächsten eine Aktivierung der Vergleicherschaltung C2 ermöglicht wird, ohne daß Daten verloren gehen.

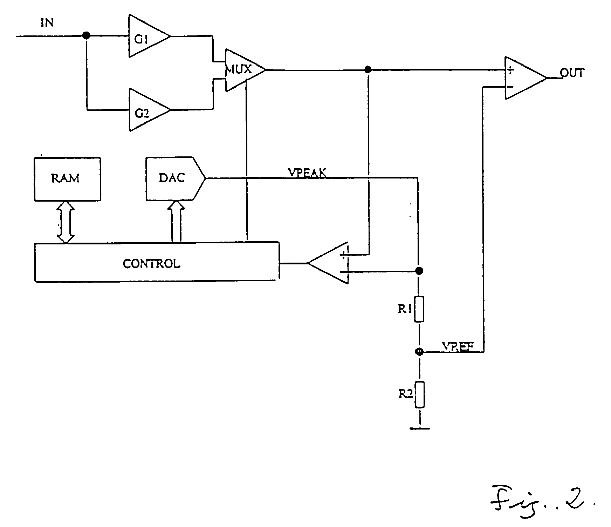

Figur 2 zeigt den Aufbau einer erfindungsgemäßen Empfängerschaltung für ein Datenkommunikationssystem gemäß dem ersten Ausführungsbeispiel.

Hierbei gelangt das Eingangssignal nach der opto-elektrischen Wandlung auf eine Parallelschaltung zweier Verstärker mit jeweils festen Verstärkungsfaktoren G1,G2. Die Ausgangssignale der Verstärker G1,G2 sind einem Multiplexer MUX zugeordnet, dessen Ausgangssignal den nicht invertierenden Eingang der Vergleicherschaltung bildet.

Das Ausgangssignal des Multiplexers MUX ist mit dem Eingang der Steuereinheit (control) verbunden. Innerhalb der Steuereinheit ist ein Speicher RAM und ein Digital-Analog-Wandler DAC vorgesehen, dessen Ausgangssignal durch die Spitzenwertspannung VPEAK dargestellt ist. Die Spitzenwertspannung VPEAK gelangt sowohl an den invertierenden Eingang eines zweiten Vergleichers als auch auf eine Spannungsteilerstufe, gebildet durch die Widerstände R1,R2, an dessen Abgriff das dem invertierenden Eingang des ersten Vergleichers zugeordnete Spannungsreferenzsignal VREF in geeigneter Weise abgeleitet wird. Der nicht invertierende Eingang der zweiten Vergleicherstufe ist mit dem Ausgang des Multiplexers MUX verbunden.

Die erfindungsgemäße Schaltung arbeitet wie folgt:

Die Steuereinheit enthält in ihrem Speicher vorabgespeicherte Werte, die Erwartungswerte für den der jeweiligen Endstellen zuzuordnenden Spitzenwertpegel darstellen. Aus der Kenntnis, welcher Daten-Burst welcher Endstelle gerade empfangen wird, leitet die Steuerung aus dem letzten Empfang des Bursts dieser Endstelle ab, welcher Verstärkungsfaktor G1,G2 zur Signalaufbereitung optimal ist. Dieser Verstärkungsfaktor wird durch entsprechende Ansteuerung der Multiplexerschaltung MUX ausgewählt.

Dem jeweiligen Daten-Burst zugeordnet wird eine Spitzenwertspannung VPEAK vom Wandler DAC erzeugt, die wenig geringer ist als die erwartete Spitzenwert-Amplitude des aktuellen Signals. Wenn durch einen Vergleich beider Signale mittels der zweiten Vergleicherstufe eine positive oder negative Abweichung festgestellt wird, kann in der Steuereinheit durch entsprechende Überschreibung der Speicherplätze für das nächste Daten-Burst derselben Stelle eine angepaßte Auswahl der Speicherwerte für Spitzenwertpegel bzw. Verstärkungsfaktoren erzielt werden. Die Verstärkungsfaktoren sind dabei so ausgewählt, daß sich die ihnen zugeordneten Dynamikbereiche überschneiden. Somit ergibt sich insgesamt eine gute Stabilität verbunden mit einem sehr weiten Dynamikbereich.

Die Digitalisierung des Datensignals erfolgt in der ersten Vergleicherstufe bezogen auf die Referenzspannung VREF.

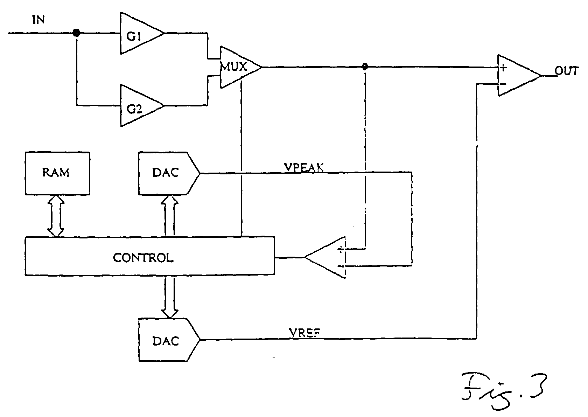

Die in Fig. 3 dargestellte Schaltung unterscheidet sich von derjenigen, die in Fig. 2 dargestellt ist, dadurch, daß die Erzeugung der Referenzspannung nicht direkt aus der Spitzenspannung VPEAK mittels eines Spannungsteilers sondern ebenfalls über die Steuereinheit mittels eines weiteren Digital-Analog-Wandlers erfolgt.

## Patentansprüche

1. System zur Punkt-zu Multipunkt Datenkommunikation mit einer Zentralstation und einer Vielzahl von über ein Netzwerk, insbesondere ein passives optisches Netzwerk mit der Zentralstation verbundenen Endstellen, wobei der Datenverkehr über Zeitbereichsmultiplex (TDM/TDMA) erfolgt, bei dem im in die Zentralstation gerichteten (hinlaufenden) Datenstrom jeder Endstelle jeweils eines von unmittelbar aneinander angrenzenden Datenpaketen (Burst) zugeordnet ist, und mit einer in der Zentralstation angeordneten gleichstromgekoppelten Empfangseinrichtung, die einen Verstärker für das optoelektrisch gewandelte Signal, einen Speicher zur der jeweiligen Endstelle zugeordneten Abspeicherung eines dem gemessenen Spitzenwertpegel entsprechenden Wertes, und eine Vergleichereinheit aufweist, in der das Signal mit einer aus dem Spitzenwertpegel des jeweiligen Burst abgeleiteten Referenzspannung (V_{ref}) verglichen wird und hieraus das digitalisierte Signal erzeugt wird,
**dadurch gekennzeichnet, daß** der Verstärker eine Vielzahl von parallelen Verstärkereinheiten jeweils konstanter Verstärkungsfaktoren (G1, G2) aufweist, die alternativ von der Steuereinheit entsprechend dem dem jeweiligen Burst zugehörigen vorabgespeicherten Wert für den Spitzenwertpegel (Vₚₑₐₖ) ausgewählt werden und daß eine weitere Vergleichereinheit vorgesehen ist, in der das verstärkte Signal mit dem dem jeweiligen Burst zugeordneten Spitzenwertpegel verglichen wird derart, daß bei einer Abweichung der Speicherwert für den Spitzenwertpegel und der Verstärkungsfaktor für den aktuellen Burst schrittweise angepaßt wird.

2. System nach Anspruch 1,
**dadurch gekennzeichnet, daß** die Referenzspannung aus dem jeweiligen Spitzenwertpegel durch einen Spannungsteiler gewonnen wird.

3. System nach einem der vorhergehenden Ansprüche,
**dadurch gekennzeichnet, daß** die Referenzspannung mittels eines Digital-/Analogwandlers aus den vorabgespeicherten Werten für den Spitzenwertpegel erzeugt wird.

4. Verfahren zur Punkt-zu-Multipunkt Kommunikation in einem Netzwerk, insbesondere einem passiven optischen Netzwerk, bestehend aus einer Zentralstation und einer Vielzahl von Endstellen, bei dem der Datentransfer von der Zentralstation zu den Endstellen (hinlaufender Datenstrom) bzw. von den Endstellen zur Zentralstation (rücklaufender Datenstrom) synchron mittels Zeitbereichsmultiplexbetrieb (TDM) erfolgt und bei dem zur Rückgewinnung der jeweiligen aus den Endstellen stammenden Datenblöcke (Bursts) aus dem rücklaufenden Datenstrom in der Zentrale ein gleichstromgekoppelter Empfänger verwendet wird, in welchem das opto-elektrisch gewandelte Signal burstweise entsprechend dem Leistungspegel des jeweiligen Datenblockes verstärkt und in einer Vergleicherstufe mit einer vorgebbaren Referenzspannung (V_{ref}) verglichen wird, wobei die Referenzspannung (V_{ref}) aus einem vorabgespeicherten, der jeweiligen Endstelle zugeordneten Speicherwert gewonnen wird,
**dadurch gekennzeichnet, daß** die Verstärkung des empfangenen Signals burstweise mit aus einer vorgebbaren Anzahl von festen Werten auswählbaren Verstärkungsfaktoren (G1, G2) erfolgt, daß das verstärkte Signal burstweise jeweils mit einem dem Spitzenwertpegel (Vₚₑₐₖ) des jeweiligen Bursts entsprechenden abgespeicherten Wert verglichen wird und daß aus der Abweichung eine Korrektur durch schrittweise Anpassung der Speicherwerte für Spitzenwertpegel und gewähltem Verstärkungsfaktor vorgenommen wird.

5. Verfahren nach Anspruch 4,
**dadurch gekennzeichnet, daß** die Auswahl des jeweiligen Verstärkungsfaktors (G1, G2) unter Steuerung eines Multiplexers erfolgt.

6. Verfahren nach Anspruch 4 oder 5,
**dadurch gekennzeichnet, daß** die Verstärkungsfaktoren so ausgewählt sind, daß sich benachbarte Faktoren in Bezug auf die ihnen zuzuordnenden Spitzenwertpegel überschneiden.

## Claims

1. A system for point-to-multipoint data communication comprising a central station and numerous terminals linked to the central station by way of a network, in particular a passive optical network, whereby data transfer takes place by way of time division multiplex (TDM/TDMA) in which in the data stream directed to the central station (outgoing data stream) one of the bit-by-bit directly adjacent bursts is allocated to each terminal, respectively, and further comprising a direct-current-coupled receiving equipment, located in the central station, comprising an amplifier for the opto-electrically converted signal, a memory for storing, allocated to the respective terminal a value corresponding to the measured peak level value, and a comparator unit in which the signal is compared with a reference voltage (V_{ref}) derived from the peak level value of the respective burst, and therefore a digitised signal is generated,
**characterised in that** the amplifier comprises numerous parallel amplifier units, each with constant amplification factors (G1, G2) which are selected alternately by the control unit, according to the prestored value for the peak level value (Vₚₑₐₖ) pertaining to the respective burst; and that a further comparator unit is provided in which the amplified signal is compared with the peak level value allocated to the respective burst, in such a way that in the case of a difference, the memory value for the peak level value and the amplification factor for the current burst are gradually adjusted.

2. A system according to claim 1,
**characterised in that** the reference voltage is derived from the respective peak level value by a voltage divider.

3. A system according to one of the preceding claims,
**characterised in that** the reference voltage is generated from the prestored values for the peak level detector by means of a digital-analog converter.

4. A method for point-to-multipoint data communication in a network, in particular a passive optical network comprising a central station and numerous terminals, in which data transfer from the central station to the terminals (outgoing data stream) or from the terminals to the central station (returning data stream) takes place synchronously by means of time division multiplex operation (TDM) and in which for recovering the respective bursts from the terminals from the returning data stream, in the central station a direct-current-coupled receiver is used in which the opto-electrically converted signal is amplified burst-by burst according to the power level of the respective burst, and compared in a comparator stage with a pre-definable reference voltage (V_{ref}) whereby the reference voltage (V_{ref}) is derived from a prestored memory value allocated to the respective terminal,
**characterised in that** amplification of the signal received takes place burst-by-burst with amplification factors (G1, G2) selectable from a predefinable number of fixed values; that the amplified signal in each instance is compared burst-by-burst with a stored value corresponding to the peak level value (Vₚₑₐₖ) of the respective burst; and that from the difference a correction is made by incremental adjustment of the memory values for peak level value and selected amplification factor.

5. A method according to claim 4,
**characterised in that** selection of the respective amplification factor (G1, G2) takes place subject to the control of a multiplexer.

6. A method according to claim 4 or 5,
**characterised in that** the amplification factors are selected in such a way that adjacent factors overlap in regard to the peak level values to be allocated to them.

## Revendications

1. Système pour la communication de données d'un point à plusieurs points comportant un poste central et une multiplicité de terminaux reliés au poste central par l'intermédiaire d'un réseau, notamment d'un réseau optique passif, et dans lequel le trafic des données s'effectue par l'intermédiaire d'un multiplexage dans le domaine temporel (TDM/TDMA), et dans lequel dans le flux de données (aller) dirigé vers le poste central, respectivement l'un des paquets de données (salve) directement adjacents est associé à chaque terminal, et comportant un dispositif de réception couplé en courant continu, qui est disposé dans le poste central et qui possède un amplificateur pour le signal converti par voie optoélectrique, une mémoire pour mémoriser, d'une manière associée au terminal respectif, une valeur correspondant au niveau de valeur maximale mesuré, et une unité formant comparateur, dans laquelle le signal est comparé à une tension de référence (V_{ref}) dérivée du niveau de valeur maximale de la salve respective, et le signal numérisé est produit à partir de là,
caractérisé en ce que l'amplificateur comporte une multiplicité d'unités d'amplification parallèles possédant des facteurs constants respectifs d'amplification (G1,G2), qui sont sélectionnés alternativement par l'unité de commande en fonction de la valeur préalablement mémorisée, associée à la salve respective, pour le niveau de valeur maximale (Vₘₐₓᵢₘᵤₘ) et il est prévu une autre unité formant comparateur, dans laquelle le signal amplifié est comparé au niveau de valeur maximum associé à la salve respective de telle sorte que, dans le cas d'un écart, la valeur en mémoire pour le niveau de valeur maximum et le facteur d'amplification pour la salve actuelle sont adaptés pas-à-pas.

2. Système selon la revendication 1, caractérisé en ce que la tension de référence est obtenue à partir du niveau de valeur maximum respectif au moyen d'un diviseur de tension.

3. Système selon l'une des revendications précédentes, caractérisé en ce que la tension de référence est produite au moyen d'un convertisseur numérique/analogique à partir des valeurs préalablement mémorisées pour le niveau de valeur maximum.

4. Procédé pour la communication d'un point en plusieurs points dans un réseau, notamment un réseau optique passif, constitué par un poste central et une multiplicité de terminaux, et dans lequel le transfert des données s'effectue en synchronisme au moyen du fonctionnement à multiplexage temporel (TDM) , depuis le poste central en direction des terminaux (flux de données aller) ou depuis les terminaux en direction du poste central (flux de données de retour) et dans lequel pour la récupération des blocs de données respectifs (salves) provenant des terminaux, à partir du flux de données de retour on utilise dans le central un récepteur couplé en courant continu, dans lequel le signal converti par voie optoélectrique est amplifié salve par salve en fonction du niveau de puissance du bloc de données respectif et est comparé dans un étage comparateur, à une tension de référence (V_{ref}) pouvant être prédéterminée, la tension de référence (V_{ref}) étant obtenue à partir d'une valeur en mémoire, préalablement mémorisée, associée au terminal respectif,
caractérisé en ce que l'amplification du signal reçu s'effectue, salve par salve, avec des facteurs d'amplification (G1,G2) pouvant être sélectionné à partir d'un nombre pouvant être prédéterminé de valeur fixe, que le signal amplifié est comparé salve par salve respectivement à une valeur mémorisée, qui correspond au niveau de valeur maximale (Vₘₐₓᵢₘᵤₘ) de la salve considérée, et qu'à partir de l'écart, une correction est exécutée au moyen d'une adaptation pas-à-pas des valeurs de mémoire pour le niveau de valeur maximum et le facteur d'amplification choisi.

5. Procédé selon la revendication 4, caractérisé en ce que la sélection du facteur d'amplification respectif (G1,G2) s'effectue sous la commande d'un multiplexeur.

6. Procédé selon la revendication 4 ou 5, caractérisé en ce que les facteurs d'amplification sont choisis de telle sorte que des facteurs voisins concordent en rapport avec le niveau de valeur maximum, qui doit leur être associé.
